# EUROPEAN PATENT APPLICATION

(11) **EP 4 760 902 A1**
(43) Date of publication of application: **17.06.2026**
(21) Application number: 25775719.5
(22) Date of filing: 10.02.2025
(51) Int. Cl.: H01M 50/183, H01M 50/184, H01M 50/169, H01M 10/04, H01M 50/249

(54) **BATTERY CELL, AND BATTERY PACK AND VEHICLE INCLUDING SAME**

(30) Priority: 25.03.2024 KR 20240040379; 06.02.2025 KR 20250015117
(71) Applicant: LG Energy Solution, Ltd., Seoul 07335 (KR)
(72) Inventor: JEONG, Seok-Hun, Daejeon 34122 (KR); KIM, Jae-Hong, Daejeon 34122 (KR); KIM, Chun-Gon, Daejeon 34122 (KR)
(74) Representative: Goddar, Heinz J.
(86) International application number: PCT/KR2025/001911
(87) International publication number: WO 2025/206569

(57) **Abstract**

A battery cell according to an embodiment of the present disclosure includes an electrode assembly obtained by winding a first electrode and a second electrode around a winding axis with a separator interposed therebetween to define a core and an outer surface, wherein the first electrode includes an active material portion coated with an active material layer along a winding direction and a first uncoated portion not coated with an active material layer, at least a portion of the first uncoated portion being used as an electrode tab by itself, a battery housing configured to receive the electrode assembly through an opening formed on one side, a housing cover configured to cover the opening and having a through-hole in a center, and a debossed ball configured to be inserted into the through-hole.

## Description

### TECHNICAL FIELD

The present disclosure relates to a battery cell, and a battery pack and vehicle including the same.

This application is based on and claims priority from Korean Patent Application No. 10-2024-0040379, filed on March 25, 2024, and Korean Patent Application No. 10-2025-0015117, filed on February 06, 2025, with the Korean Intellectual Property Office, the disclosure of which is incorporated herein in its entirety by reference.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices. These secondary batteries are attracting attention as a new energy source for improving eco-friendliness and energy efficiency because of the primary advantage of dramatically reducing the use of fossil fuels and another advantage of not generating by-products resulting from energy use.

Secondary batteries currently widely used include lithium-ion batteries, lithium-polymer batteries, nickel-cadmium batteries, nickel-hydrogen batteries, nickel-zinc batteries, and the like. The operating voltage of this unit secondary battery cell, that is, the unit battery cell, is approximately 2.5V to 4.5V. Therefore, when an output voltage higher than this is required, a battery pack may be configured by connecting a plurality of battery cells in series. In addition, a battery pack may be configured by connecting multiple battery cells in parallel depending on the charge/discharge capacity required for the battery pack. Accordingly, the number of battery cells included in the battery pack may be set in various ways depending on the required output voltage or charge/discharge capacity.

Meanwhile, there was a battery cell having beading and crimping structures in the past, and a beading process, a crimping process, and a sizing process were performed to implement this structure. The battery cell including such beading and crimping structures has a problem in which a dead space increases to the side in the winding axis inside the battery, thereby reducing the energy density.

### DISCLOSURE

### Technical Problem

Therefore, the present disclosure aims to increase the energy density by excluding the beading and crimping structures from the battery cell.

In addition, the present disclosure aims to prevent the occurrence of pores when welding a housing cover and a debossed ball.

Furthermore, the present disclosure aims to prevent the formation of cracks in the welding area of the housing cover and the debossed ball.

In addition, the present disclosure aims to improve the sealing of the contact area between the housing cover and the debossed ball.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery cell including: an electrode assembly obtained by winding a first electrode and a second electrode around a winding axis with a separator interposed therebetween to define a core and an outer surface, wherein the first electrode includes an active material portion coated with an active material layer along a winding direction and a first uncoated portion not coated with an active material layer, at least a portion of the first uncoated portion being used as an electrode tab by itself; a battery housing configured to receive the electrode assembly through an opening formed on one side; a housing cover configured to cover the opening and having a through-hole in a center; and a debossed ball configured to be inserted into the through-hole.

In an embodiment of the present disclosure, the battery housing may have a cylindrical shape with a constant radius.

In another embodiment of the present disclosure, the housing cover may have a plate shape and may be configured to be coupled to the opening of the battery housing.

In another embodiment of the present disclosure, a diameter of the through-hole may be smaller than a diameter of a central winding hole of the electrode assembly.

In another embodiment of the present disclosure, a diameter of the debossed ball may be smaller than a diameter of a central winding hole of the electrode assembly.

In another embodiment of the present disclosure, the debossed ball may have a groove formed on a circumference.

Preferably, an edge area of the through-hole of the housing cover may be fitted into the groove.

In another embodiment of the present disclosure, the groove may be provided in an area located outward in an axial direction of the battery cell from a center of the debossed ball.

In another embodiment of the present disclosure, based on the groove, a volume of the debossed ball located outside the battery cell may be smaller than a volume of the debossed ball located inside the battery cell.

In another embodiment of the present disclosure, a coupling angle between the housing cover and the debossed ball may be greater than 90 degrees.

In another embodiment of the present disclosure, a welding bead may be formed by welding at a contact point between the housing cover and the debossed ball.

In another embodiment of the present disclosure, the welding bead may be formed up to an inner surface of the housing cover.

In another aspect of the present disclosure, there is provided a method for manufacturing a battery cell, and the method may include: inserting an electrode assembly through an opening of a battery housing; covering the opening of the battery housing with a housing cover; and inserting a debossed ball having a groove formed on a circumference into a through-hole formed in the housing cover.

In another aspect of the present disclosure, there is provided a battery pack including at least one battery cell according to the above embodiment.

In another aspect of the present disclosure, there is provided a vehicle including at least one battery pack according to the above embodiment.

### Advantageous Effects

According to the present disclosure, it is possible to increase energy density by excluding the beading and crimping structures from the battery cell.

In addition, according to the present disclosure, it is possible to prevent the occurrence of pores when welding the housing cover and the debossed ball.

Furthermore, according to the present disclosure, it is possible to prevent the formation of cracks in the welding area of the housing cover and the debossed ball.

In addition, the present disclosure enables improvement of the sealing of the contact area between the housing cover and the debossed ball.

However, the effects obtainable from the present disclosure are not limited to the above-mentioned effects, and other effects not mentioned above will be clearly understood by those skilled in the art from the description of the invention described below.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a drawing illustrating a battery cell according to an embodiment of the present disclosure.
FIG. 2 is an exploded perspective view of the battery cell in FIG. 1.
FIG. 3 is a cross-sectional view of the battery cell in FIG. 1.
FIG. 4 is a drawing illustrating a process of coupling of a debossed ball and a housing cover according to a comparative example of the present disclosure.
FIG. 5 is a drawing illustrating a shape of a debossed ball according to an embodiment of the present disclosure.
FIG. 6 is a drawing illustrating a state before a debossed ball is coupled to a housing cover according to an embodiment of the present disclosure.
FIG. 7 is a drawing illustrating a process of inserting a debossed ball into a housing cover according to an embodiment of the present disclosure.
FIG. 8 is a drawing illustrating a coupling angle between a debossed ball and a housing cover according to an embodiment of the present disclosure.
FIG. 9 is a drawing illustrating a process of performing laser welding while a debossed ball and a housing cover are coupled according to an embodiment of the present disclosure.
FIG. 10 is a drawing specifically illustrating a contact area between a debossed ball and a housing cover according to an embodiment of the present disclosure.
FIG. 11 is a drawing illustrating a battery pack including the battery module in FIG. 1.
FIG. 12 is a drawing illustrating a vehicle including the battery pack in FIG. 11.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

The sizes of some elements shown in the attached drawings may be exaggerated, instead of reflecting their actual sizes, for convenience of explanation and clarification of the present disclosure. In addition, the same reference numerals may indicate the same elements among the embodiments.

Stating that two objects to be compared are the same indicates that they are "substantially the same." Therefore, "substantially the same" may include the case having a deviation that is considered low in the art, for example, a deviation of less than 5%. In addition, a parameter that is uniform in a certain area may indicate that it is uniform from the average perspective.

Although "first," "second," etc. are used to describe various elements, these elements are not limited to these terms. These terms are only used to distinguish one element from another element, and unless otherwise stated, a first element may also be a second element.

Throughout the specification, unless otherwise stated, respective elements may include a single or a plurality of elements.

Configuration in which an element is disposed "in the upper portion (or lower portion)" or "at the top (or bottom)" of a target element may indicate not only that the element may be disposed in contact with the upper surface (or lower surface) of the target element, but also that another element may be interposed between the target element and the element disposed at the top (or bottom) of the target element.

Additionally, the expression "an element is 'connected,' 'coupled,' or 'fastened' to another element" should be understood that the two elements may be directly connected or coupled to each other, and that another element may be "interposed" between the two elements, or that the two elements may be "connected," "coupled," or "fastened" through another element.

Throughout the specification, "A and/or B", unless otherwise stated, may denote A or B, or A and B, and "C to D", unless otherwise stated, may denote "equal to or greater than C and equal to or less than D."

For convenience of explanation, in this specification, the longitudinal direction of a winding axis of an electrode assembly 10 wound in a jellyroll shape will be referred to as an "axial direction (Y)." In addition, the direction surrounding the winding axis will be referred to as a "circumferential direction(X)." In addition, the direction approaching or moving away from the winding axis will be referred to as a "radial direction." Among these, the direction approaching the winding axis is called a "centripetal direction," and the direction moving away from the winding axis is called a "centrifugal direction."

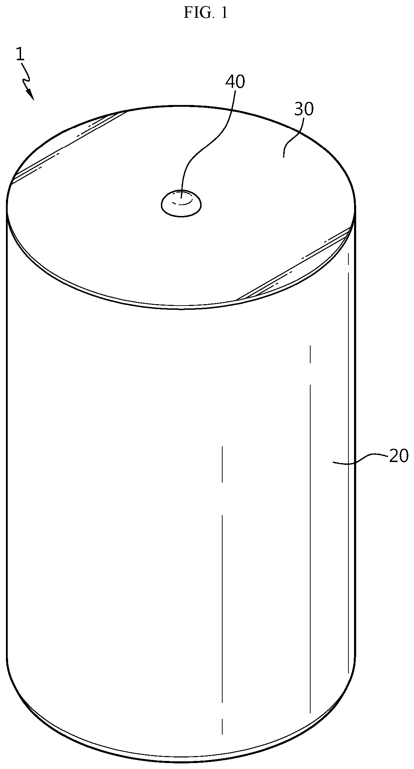

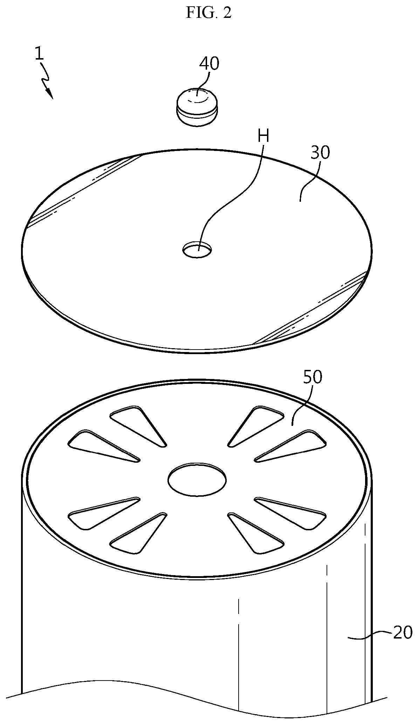

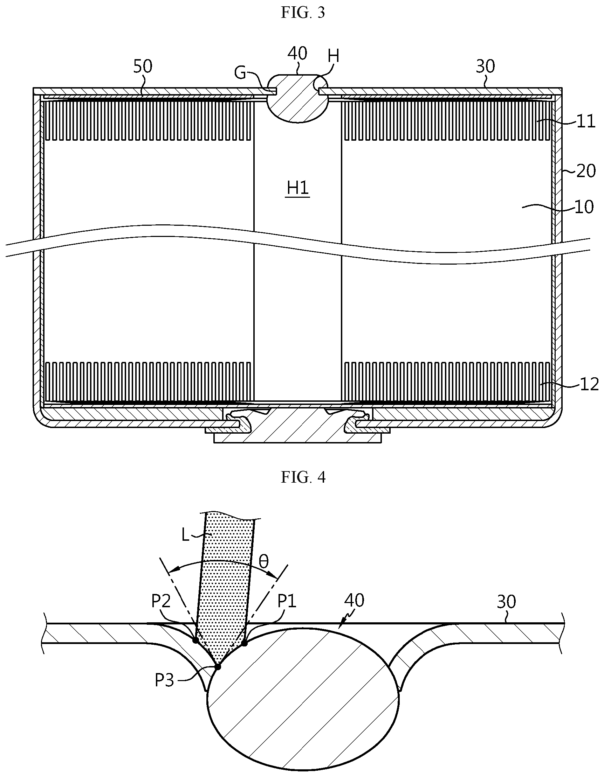

FIG. 1 is a drawing illustrating a battery cell 1 according to an embodiment of the present disclosure, FIG. 2 is an exploded perspective view of the battery cell in FIG. 1, and FIG. 3 is a cross-sectional view of the battery cell in FIG. 1.

Referring to FIGS. 1 to 3, the battery cell 1 according to an embodiment of the present disclosure includes an electrode assembly 10, a battery housing 20, a housing cover 30, and a debossed ball 40. The battery cell 1 may further include a current collector 50. The present disclosure is not limited to a specific shape of battery and may be applied to batteries in other shapes.

Referring to FIG. 3, the electrode assembly 10 includes a first uncoated portion 11 and a second uncoated portion 12. More specifically, the electrode assembly 10 has a structure in which a first electrode and a second electrode are wound around a winding axis with a separator interposed therebetween to define a core and an outer surface. That is, the electrode assembly 10 applied to the present disclosure may be a jellyroll-type electrode assembly 10. In this case, an additional separator may be provided on the outer surface of the electrode assembly 10 for insulation from the battery housing 20. The electrode assembly 10 may have, without limitation, a winding structure well known in the art.

Referring to FIG. 3, the first electrode includes a first electrode current collector and a first electrode active material applied on one or both surfaces of the first electrode current collector. An uncoated portion, on which the first electrode active material is not applied, is provided on one end of the first electrode in the width direction (parallel to the height direction of the battery cell 1 illustrated in FIG. 1). That is, the first electrode includes an uncoated portion that is not coated with the active material at the long-side end along the winding direction and is exposed to the outside of the separator. The uncoated portion that functions as a first electrode tab will be referred to as a first uncoated portion 11 hereinafter. The first uncoated portion 11 is provided at the top of the electrode assembly 10 stored in the battery housing 20 in the height direction (parallel to the height direction of the battery cell 1 illustrated in FIG. 1). That is, the first electrode includes a first uncoated portion 11 that has no active material layer coated on the long-side end and is exposed to the outside of the separator, and at least a portion of the first uncoated portion 11 is used as an electrode tab by itself. The first uncoated portion 11 may be, for example, a negative electrode tab.

Referring to FIG. 3, the second electrode includes a second electrode current collector and a second electrode active material applied on one or both sides of the second electrode current collector. An uncoated portion on which a second electrode active material is not applied is provided on the other end of the second electrode in the width direction (parallel to the height direction of the battery cell 1 illustrated in FIG. 1). That is, the second electrode includes an uncoated portion at the long-side end along the winding direction, which has no active material coated thereon and is exposed to the outside of the separator. The uncoated portion that functions as a second electrode tab will be referred to as a second uncoated portion 12 hereinafter. The second uncoated portion 12 is provided at the bottom of the electrode assembly 10 stored in the battery housing 20 in the height direction. That is, the second electrode includes a second uncoated portion 12 that is not coated with an active material layer at the long-side end and is exposed to the outside of the separator, and at least a portion of the second uncoated portion 12 is used as an electrode tab by itself. The second uncoated portion 12 may be, for example, a positive electrode tab.

Meanwhile, in the present disclosure, any active material known in the art may be used, without limitation, for the positive electrode active material coated on the positive electrode plate and the negative electrode active material coated on the negative electrode plate.

Referring to FIGS. 1 to 3, the battery housing 20 may be configured as a substantially cylindrical container having an opening formed on one side. The battery housing 20 may include a conductive metal material. The side surface of the battery housing 20 and the lower surface located opposite the opening may be formed integrally with each other. That is, the battery housing 20 may have an opening on the upper side in the height direction and a closed portion on the lower side. The lower surface of the battery housing 20 may be configured to be substantially flat. The battery housing 20 may receive the electrode assembly 10 through the opening formed on one side in the height direction. The battery housing 20 may also receive an electrolyte through the opening.

The side surface of the battery housing 20 may be configured in a cylindrical shape having a constant radius. Preferably, the entire area of the side surface of the battery housing 20 may be configured in a cylindrical shape with a constant radius. For example, the conventional battery housing 20 may further include a beading portion formed at an end adjacent to the opening and a crimping portion formed on the beading portion, whereas the battery housing 20 of the present disclosure does not have beading and crimping structures formed on the side surface. That is, the battery housing 20 of the present disclosure is not configured such that its side surface is recessed inward. That is, the battery housing 20 of the present disclosure is configured to have a constant radius on the entire area of the side surface.

According to this structure, by excluding the beading and crimping structures from the cylindrical battery cell 1, it is possible to prevent the occurrence of various process errors that may occur due to the beading and crimping structures. In addition, process may be simplified by removing the beading, crimping, and sizing processes. In addition, this may prevent a phenomenon in which a dead space increases along the winding axis direction of the electrode assembly 10 due to the beading and crimping structures in the battery to lower the energy density. That is, according to the structure of the present disclosure described above, the energy density of the battery cell 1 may be improved.

In another embodiment of the present disclosure, the battery housing 20 may be electrically connected to the first uncoated portion 11. Accordingly, the battery housing 20 may have a first polarity.

Referring back to FIGS. 1 to 3, the housing cover 30 may be configured to cover the opening formed on one side of the battery housing 20. The housing cover 30 may be configured substantially as, for example, a plate. The housing cover 30 may be coupled onto the opening of the battery housing 20. More specifically, the housing cover 30 may be coupled to the top of the battery housing 20. Preferably, the housing cover 30 may be fixed to the top of the battery housing 20 through the coupling. For example, referring to FIG. 1 and FIG. 3, the housing cover 30 may be seated on the top edge of the opening of the battery housing 20. In this case, the battery housing 20 and the housing cover 30 may be coupled to each other at the contact point of the top edge of the battery housing 20 and the housing cover 30. For example, the battery housing 20 and the housing cover 30 may be coupled to each other at the contact point of the top edge of the battery housing 20 and the housing cover 30 by welding. The battery housing 20 and the housing cover 30 may also be coupled to each other by other coupling methods other than welding, and the coupling method is not limited thereto. The battery cell 1 may be guaranteed to be sealed by coupling the battery housing 20 and the housing cover 30.

The housing cover 30 may be made of a metal material. Therefore, the housing cover 30 may have conductivity. For example, the housing cover 30 may include an aluminum material. Since the battery housing 20 is also made of a metal having conductivity, the housing cover 30 coupled to the battery housing 20 may also be configured to have the same polarity as the battery housing 20. For example, the housing cover 30 may be configured to have the first polarity.

In another embodiment of the present disclosure, the housing cover 30 may have a through-hole H in at least a partial area. In this case, the through-hole H may be blocked by the debossed ball 40, which will be described later. For example, the debossed ball 40 may be press-fitted into the through-hole H. As a result, since the through-hole H is blocked by the debossed ball 40, the sealing of the battery cell 1 may be secured.

Meanwhile, the through-hole H may be configured to discharge gas generated during the pre-charge process. That is, after the degassing process for discharging all gases generated during the pre-charge process through the through-hole H, the debossed ball 40 may be configured to be coupled to the through-hole H. Accordingly, the swelling phenomenon of the battery cell 1 may be prevented.

In another aspect of the present disclosure, the housing cover 30 may have a through-hole H in the center. The through-hole H may, for example, serve as an electrolyte injection port. The center of the through-hole H may match the center of the central winding hole H1 of the electrode assembly 10. That is, the through-hole H of the housing cover 30 may be positioned above the central winding hole H1 of the electrode assembly 10 in the winding axis direction. Preferably, the diameter of the through-hole H may be configured smaller than the diameter of the central winding hole H1 of the electrode assembly 10.

According to this structure, when the debossed ball 40 moves downward while being press-fitted into the through-hole H, the debossed ball 40 may be prevented from damaging the electrode assembly 10 or the current collector 50 coupled to the electrode assembly 10. That is, even if the debossed ball 40 is press-fitted downward, the debossed ball 40 is configured to enter the central winding hole H1 of the electrode assembly 10, so it does not affect the bent surface or electrode tab of the electrode assembly 10.

Similarly, the diameter of the debossed ball 40 may be configured smaller than the diameter of the central winding hole H1 of the electrode assembly 10. It is preferable that the diameter of the debossed ball 40 is about 70% or less of the diameter of the central winding hole H1 of the electrode assembly 10. It is preferable that the diameter of the debossed ball 40 is about 66% or less of the diameter of the central winding hole H1 of the electrode assembly 10. For example, in the case where the diameter of the central winding hole H1 is about 6 mm, the diameter of the debossed ball 40 may be configured to be about 4 mm.

According to this structure, since the diameter of the debossed ball 40 is smaller than the central winding hole H1 of the electrode assembly 10, even if the debossed ball 40 is press-fitted downward, the debossed ball 40 enters the central winding hole H1 of the electrode assembly 10, so it does not affect the bent surface or electrode tab of the electrode assembly 10.

In another embodiment of the present disclosure, referring to FIGS. 1 to 3, the debossed ball 40 may be configured to be inserted into the through-hole H.

For example, the debossed ball 40 may be configured to have a substantially spherical shape. Alternatively, as implemented in an embodiment of the present disclosure, it may be configured in a slightly flat ball shape obtained by pressing it up and down. By inserting the debossed ball 40 into the through-hole H of the housing cover 30, the sealing of the battery cell 1 may be secured.

With this structure, the beading, crimping, and sizing processes may be omitted, so that process may be simplified. Furthermore, the phenomenon in which the dead space in the battery increases along the winding axis direction of the electrode assembly 10 due to the beading and crimping structures, thereby reducing the energy density, may be prevented. That is, according to the structure of the present disclosure described above, the energy density of the battery cell 1 may be improved.

FIG. 4 is a drawing illustrating a process of coupling of a debossed ball 40 and a housing cover 30 according to a comparative example of the present disclosure.

For example, the debossed ball 40 according to the comparative example of the present disclosure may be configured as a substantially spherical structure with a convex outer surface. When the substantially spherical debossed ball 40 is press-fitted into the through-hole H of the housing cover 30, as shown in FIG. 4, the coupling angle between the debossed ball 40 and the housing cover 30 becomes smaller due to excessive pressing. For example, when the debossed ball 40 according to the comparative example of the present disclosure is press-fitted into the housing cover 30, the coupling angle may be configured as a substantially acute angle. As described above, in the case where the coupling angle of the debossed ball 40 and the housing cover 30 is acute, when the coupling point of the housing cover 30 and the debossed ball 40 is irradiated with the laser beam L, welding energy cannot be sufficiently transmitted to the exact point where the debossed ball 40 and the housing cover 30 meet. For example, referring to FIG. 4, in the case where the point where the edge of the laser beam L and the debossed ball 40 meet is P1, where the point where the edge of the laser beam L and the housing cover 30 meet is P2, and where the intersection point where the debossed ball 40 and the housing cover 30 meet is P3, the laser beam L irradiates the entire area encompassing P1, P2, and P3, but as the coupling angle becomes narrower, the most energy is transferred to the points P1 and P2, which are the areas where the laser beam L first reaches, and relatively less energy may be transferred to P3. Accordingly, pores are more likely to be formed in the area where the debossed ball 40 and the housing cover 30 meet. More specifically, when the laser beam is focused on the points P1 and P2, the area near the point P1 of the debossed ball 40 and the area near the point P2 of the housing cover 30 are melted down to the point P3. In this case, an air gap is formed at the point P3, and the air located in the air gap meets the melted base material near the point P1 of the debossed ball 40 and the melted base material near the point P2 of the housing cover 30. Accordingly, the filler material is solidified into a porous structure. As a result, the pores such as the porous structure bring about cracks and degrade the sealing performance.

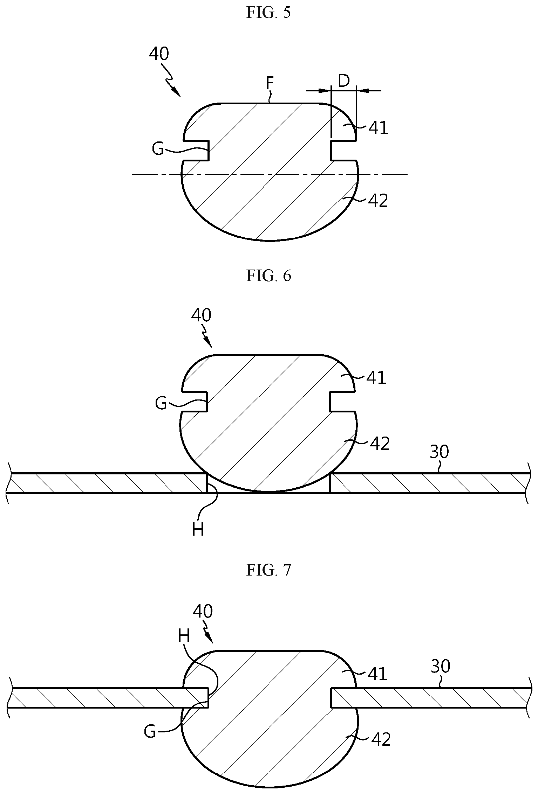

On the other hand, the above problem may be solved by the debossed ball 40 according to an embodiment of the present disclosure. FIG. 5 is a drawing illustrating a shape of a debossed ball 40 according to an embodiment of the present disclosure.

Referring to FIG. 5, the debossed ball 40 may have a groove G on its circumference. The groove G of the debossed ball 40 may be recessed inward. That is, the debossed ball 40 may be configured such that at least a portion of the circumference is recessed inward. The groove G recessed inward is not limited to a specific shape. For example, as shown in FIG. 5, the groove G may be configured to have a right-angled cross-section.

In an embodiment of the present disclosure, the edge area of the through-hole H of the housing cover 30 may be configured to fit into the groove G. Preferably, the edge area of the through-hole H of the housing cover 30 may be configured to be press-fitted into the groove G.

That is, the groove G may be fitted into the through-hole H of the housing cover 30. For example, both the debossed ball 40 and the housing cover 30 may be made of a metal having rigidity, but when the debossed ball 40 is press-fitted to the housing cover 30, the edge area of the through-hole H of the housing cover 30 may be fitted into the groove G provided in the debossed ball 40 due to the elasticity of the housing cover 30 which is configured to be relatively thin.

Preferably, the cross-sectional shape of the groove G may be configured to match the cross-sectional shape of the through-hole H of the housing cover 30. For example, referring to FIG. 3, the cross-section of the groove of the debossed ball 40 may be configured to have a right-angled shape. In this case, the cross-section of the through-hole H may be configured to have a right-angled shape that matches the same. In this case, the sealing between the housing cover 30 and the debossed ball 40 may be further improved.

According to the structure described above, since the edge area of the through-hole H of the housing cover 30 fits into the groove G, there is no clearance between the housing cover 30 and the debossed ball 40. That is, an air gap is less likely to be formed between the housing cover 30 and the debossed ball 40. Accordingly, the phenomenon in which the base material melted during welding meets the air gap and solidifies into a porous structure may be prevented. As a result, according to the configuration of the present disclosure, the occurrence of cracks due to pores at the welded location may be prevented. Accordingly, the sealing performance of the battery cell 1 may be improved.

In addition, according to the above configuration, the coupling angle between the housing cover 30 and the debossed ball 40 may be secured to a predetermined angle or higher. Accordingly, the ease of welding may be improved. More specifically, the formation of pores in the welding area may be minimized due to the wide coupling angle between the housing cover 30 and the debossed ball 40, thereby preventing cracks from being formed in the welding area during laser welding. Accordingly, the sealing between the housing cover 30 and the debossed ball 40 may be secured. In addition, the bonding strength between the housing cover 30 and the debossed ball 40 may be secured to a predetermined level or higher.

Referring back to FIG. 5, the groove G may be provided in an area located outward in the axial direction of the battery cell 1 from the center of the debossed ball 40. For example, the dotted line illustrated in FIG. 5 indicates a virtual line passing through the center of the debossed ball 40. That is, the dotted line may be the center line of the debossed ball 40.

The debossed ball 40 may include a first area 41 located in an area outward from the center line in the axial direction of the battery cell 1 and a second area 42 located in an area inward from the center line in the axial direction of the battery cell 1. In this case, the groove G may be provided on the first area 41.

Preferably, that is, the volume of the debossed ball 40 located outward from the groove G of the battery cell 1 may be configured smaller than the volume of the debossed ball 40 located inward from the groove G of the battery cell 1. That is, the volume of the first area 41 of the debossed ball 40 may be configured smaller than the volume of the second area 42 of the debossed ball 40.

This structure enables the laser beam L to more easily reach the contact area of the groove G and the through-hole H when welding is performed between the debossed ball 40 and the housing cover 30. That is, the laser beam L is emitted so as to directly touch the first area 41 of the debossed ball 40, and in this case, since the thickness of the first area 41 of the debossed ball 40 is smaller than the thickness of the second area 42, the distance from the first area 41 of the debossed ball 40 that is directly irradiated with the laser beam L to the contact point of the groove G and the through-hole H may be reduced. Accordingly, the welding performance at the contact point between the groove G and the through-hole H may be improved.

In another embodiment of the present disclosure, the debossed ball 40 may be configured to have conductivity. That is, the debossed ball 40 may include a metal. For example, the debossed ball 40 may include an aluminum material. Accordingly, the debossed ball 40 may have the same polarity as the housing cover 30 in direct contact with the same. For example, the debossed ball 40 may have the first polarity.

In an embodiment of the present disclosure, the housing cover 30 may be configured as a plate in which the central area is recessed inward. For example, the central area including the through-hole H of the housing cover 30 may be recessed to a predetermined depth toward the inside of the battery cell 1. For example, an area having a predetermined radius from the center of the housing cover 30 may be recessed to a predetermined depth toward the inside of the battery cell 1.

According to the above structure, when the debossed ball 40 is inserted into the housing cover 30, the debossed ball 40 protrudes upward from the housing cover 30 by the height of the first area 41. In this case, if the central area of the housing cover 30 is recessed toward the inside of the battery cell 1 by the height of the first area 41, the debossed ball 40 may not protrude outside the upper surface of the battery cell 1 even if it protrudes upward from the housing cover 30 by the height of the first area 41. Accordingly, when the battery cell 1 stands such that the upper surface faces the floor, it may be maintained horizontally.

In another embodiment of the present disclosure, the debossed ball 40 may have a flat portion F that is substantially flat in the area facing outward from the battery cell 1.

For example, referring to FIG. 5, the upper part of the first area 41 of the debossed ball 40 may be provided with a flat portion F in which a certain area is configured flat. That is, the first area 41 may be configured to be substantially flat.

With this configuration, the force applied when the debossed ball 40 is press-fitted may be uniformly applied to the debossed ball 40. In addition, with the above structure, since the thickness of the first area 41 of the debossed ball 40 becomes smaller, the irradiation distance from the first area 41 of the debossed ball 40 that is directly irradiated with the laser beam L to the contact point between the groove G and the through-hole H may be reduced. Accordingly, the welding performance at the contact point between the groove G and the through-hole H may be improved.

FIG. 6 is a drawing illustrating a state before a debossed ball 40 is coupled to a housing cover 30 according to an embodiment of the present disclosure, and FIG. 7 is a drawing illustrating a process of inserting a debossed ball 40 into a housing cover 30 according to an embodiment of the present disclosure.

Referring to FIGS. 6 and 7, the diameter of the debossed ball 40 may be configured to be larger than the diameter of the through-hole H. That is, since the diameter of the through-hole H of the housing cover 30 is smaller than the diameter of the debossed ball 40, the debossed ball 40 is placed on the through-hole of the housing cover 30, as shown in FIG. 6, before the debossed ball 40 is press-fitted thereinto.

According to the above configuration, since the diameter of the debossed ball 40 is larger than the diameter of the through-hole H, once the debossed ball 40 is press-fitted and coupled to the through-hole H, the debossed ball 40 is less likely to be separated from the through-hole H.

In another embodiment, the diameter of the through-hole H may be larger than or equal to the diameter of the groove G. Therefore, when the debossed ball 40 is press-fitted in a direction toward the housing cover 30, the housing cover 30 in the area around the through-hole H may be slightly deformed to be bent downward due to the elasticity of the housing cover 30 and then return to its initial flat state due to the elasticity of the housing cover 30, so that the groove G may be fitted into the through-hole H. That is, the edge area of the through-hole H of the housing cover 30 may be fitted into the groove G. In this case, it is more preferable that the diameter of the groove G is configured to be the same as the diameter of the through-hole H.

According to the configuration as described above, since the diameter of the groove G and the diameter of the through-hole H are configured to be the same, it is possible to prevent formation of a fine gap between the groove G and the through-hole H. Accordingly, when the contact point of the groove G and the through-hole H is irradiated with the laser beam L, welding may be performed smoothly. That is, the welding performance may be improved.

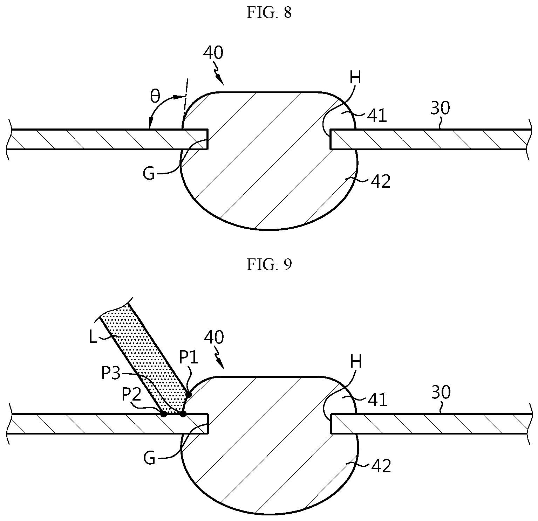

FIG. 8 is a drawing illustrating a coupling angle between a debossed ball 40 and a housing cover 30 according to an embodiment of the present disclosure. and FIG. 9 is a drawing illustrating a process of performing laser welding while a debossed ball 40 and a housing cover 30 are coupled according to an embodiment of the present disclosure.

Referring to FIGS. 8 and 9, the coupling angle formed by the housing cover 30 and the debossed ball 40 may be configured to be approximately 90 degrees or more. On the other hand, referring to FIG. 4, the coupling angle formed by the housing cover 30 and the debossed ball 40 according to the comparative example of the present disclosure is configured to be less than approximately 90 degrees. As described above, if the coupling angle formed by the housing cover 30 and the debossed ball 40 becomes small, the most energy may be transferred to the points P1 and P2, which are areas that the laser beam L first reaches, and relatively less energy may be transferred to the point P3. Accordingly, the pores are likely to be formed in the area where the debossed ball 40 and the housing cover 30 meet. As a result, cracks may occur due to these pores, so that the sealing performance may deteriorate.

On the other hand, according to the shape of the debossed ball 40 according to an embodiment of the present disclosure, the coupling angle formed by the housing cover 30 and the debossed ball 40 may be about 90 degrees or more. Preferably, according to the shape of the debossed ball 40 according to an embodiment of the present disclosure, the coupling angle formed by the housing cover 30 and the debossed ball 40 may be about 90 degrees or more, i.e., an obtuse angle.

More specifically, the coupling angle indicates the angle between the tangent of the debossed ball 40 and the housing cover 30 at the intersection point of the debossed ball 40 and the housing cover 30. That is, the coupling angle indicates the angle between the tangent of the debossed ball 40 and the housing cover 30 at the point where the first area 41 starts from the groove G. In other words, according to the structure of the debossed ball 40 of the present disclosure, the slope of the tangent of the debossed ball 40 at the point where the first area 41 starts from the groove G is configured to be gentle. That is, the tangent of the debossed ball 40 at the point where the first area 41 starts from the groove G may be tilted toward the winding center of the electrode assembly 10. Preferably, the coupling angle formed by the housing cover 30 and the debossed ball 40 may be configured to be an obtuse angle.

According to this structure, it is possible to prevent energy from being concentratedly transferred to the points P1 and P2 that the laser beam L first reaches. That is, since the coupling angle between the housing cover 30 and the debossed ball 40 is approximately 90 degrees or more, a sufficient amount of energy may be transmitted to the intersection point P3 where the debossed ball 40 and the housing cover 30 meet. Accordingly, the pores are less likely to be formed in the area where the debossed ball 40 and the housing cover 30 meet.

More specifically, according to the shape of the debossed ball 40 according to an embodiment of the present disclosure, the coupling angle between the housing cover 30 and the debossed ball 40 exceeds about 90 degrees, so that no air gap is formed near the point P3. That is, according to the structure of the present disclosure, since the coupling angle between the housing cover 30 and the debossed ball 40 becomes an obtuse angle, the phenomenon of the laser beam being focused on the points P1 and P2 may be prevented. Accordingly, the area near the point P1 of the debossed ball 40 and the area near the point P2 of the housing cover 30 may be prevented from melting down to the point P3. Therefore, the phenomenon in which the base material melted by welding solidifies into a porous structure may be effectively prevented. As a result, according to the present disclosure, the occurrence of cracks due to such pores may be prevented. Accordingly, the sealing performance of the battery cell 1 may be improved.

In an embodiment of the present disclosure, the contact point between the housing cover 30 and the debossed ball 40 may be configured to have a welding bead formed by welding.

For example, referring to FIG. 9, a laser beam L may irradiate the point P3, which is an intersection point where the debossed ball 40 and the housing cover 30 meet. In this case, since the laser beam L is configured to have a predetermined cross-sectional area, the laser beam L may be incident on not only the point P3 but also the surrounding area of the point P3. That is, the laser beam L may irradiate the area from the point P1 where the edge point of the laser beam L and the debossed ball 40 meet to the point P2 where the edge point of the laser beam L and the housing cover 30 meet. In this case, since the coupling angle formed by the housing cover 30 and the debossed ball 40 is approximately 90 degrees or more as described above, a sufficient amount of energy may be transmitted to the intersection point P3 where the debossed ball 40 and the housing cover 30 meet. Accordingly, a welding bead may be formed in the area including the points P1, P2, and P3.

If the debossed ball 40 is press-fitted into the through-hole H of the housing cover 30, and if welding is not performed, the tightness at the contact point between the debossed ball 40 and the housing cover 30 may be relatively low. However, according to the configuration described above, the bonding strength at the coupling point between the debossed ball 40 and the housing cover 30 may be improved. In addition, the sealing performance at the coupling point between the debossed ball 40 and the housing cover 30 may be improved.

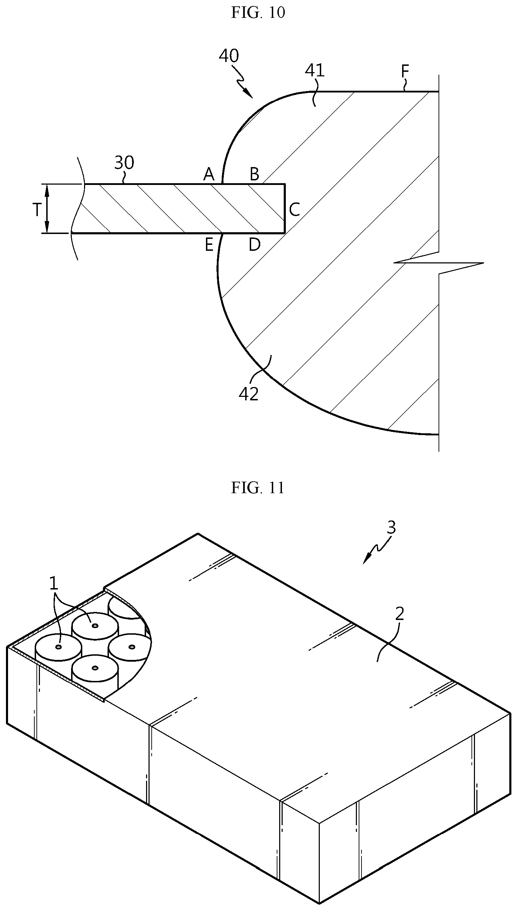

FIG. 10 is a drawing specifically illustrating a contact area between a debossed ball 40 and a housing cover 30 according to an embodiment of the present disclosure.

In an embodiment of the present disclosure, the area where the housing cover 30 is coupled to the debossed ball 40 may be subdivided.

For example, referring to FIG. 10, on the outer surface of the housing cover 30, the area where the housing cover 30 begins to come into contact with the debossed ball 40 may be defined as area A. Meanwhile, on the outer surface of the housing cover 30, the area where the housing cover 30 is inserted into the groove G of the debossed ball 40 may be defined as area B. Next, the area where the inner surface of the through-hole H of the housing cover 30 and the innermost point of the groove G of the debossed ball 40 meet may be defined as area C. On the inner surface of the housing cover 30, the area where the housing cover 30 is inserted into the groove G of the debossed ball 40 may be defined as area D. Lastly, on the inner surface of the housing cover 30, the area where the housing cover 30 begins to come into contact with the debossed ball 40 may be defined as area E.

Here, area A may be directly irradiated with the laser beam L. In this case, if the size of the cross-section of the laser beam L is adjusted, area B may also be affected by the laser beam L. In some cases, if the power and irradiation depth of the laser beam L are adjusted, the influence of the laser beam L may also reach areas C, D, and E. Preferably, the power and irradiation depth of the laser beam L may be adjusted such that all areas A to E are irradiated with the laser beam L. That is, according to the above configuration, 1st to 5th welding may be performed for the respective areas A to E.

According to this configuration, the welding bead may be formed up to the inner surface of the housing cover 30. That is, even if the laser beam L irradiates the area from the outside of the battery cell 1, the laser beam L may affect all areas A to E, enabling welding between the housing cover 30 and the debossed ball 40 even on the inner surface of the housing cover 30. That is, depending on the welding depth and angle, 1st to 5th sealing is possible for all areas A to E. Therefore, according to the above configuration, the bonding strength at the coupling point of the debossed ball 40 and the housing cover 30 may be improved. In addition, the sealing performance at the coupling point of the debossed ball 40 and the housing cover 30 may be improved. Although the area where the housing cover 30 is coupled to the debossed ball 40 is subdivided into 5 sections A to E for convenience of explanation, it is not limited thereto, and the area may be subdivided into more sections.

Referring back to FIGS. 2 and 3, the battery cell 1 may further include a current collector 50 that is coupled to the first uncoated portion 11 and electrically coupled to the inner surface of the housing cover 30.

The current collector 50 according to an embodiment of the present disclosure is stored inside the battery housing 20, electrically connected to the electrode assembly 10, and also electrically connected to the battery housing 20. That is, the current collector 50 electrically connects the electrode assembly 10 and the battery housing 20. That is, the current collector 50 may include a conductive metal.

The current collector 50 may be substantially configured as a plate. In this case, the lower surface of the plate may be electrically coupled to the first uncoated portion 11. The upper surface of the plate may be electrically coupled to the housing cover 30. Alternatively, the upper surface of the plate may be indirectly electrically connected to the housing cover 30 through a structure such as a lead tab, instead of being directly connected thereto. That is, the current collector 50 may be configured to electrically connect the housing cover 30 and the first uncoated portion 11. The current collector 50 and the first uncoated portion 11 and/or the housing cover 30 may be coupled by, for example, welding.

The current collector 50 may have a current collector hole formed at a position corresponding to a central winding hole H1 formed substantially at the center of the electrode assembly 10. The central winding hole H1 and the current collector hole, which communicate with each other, may function as a passage for insertion of a welding rod for welding between a terminal and a second current collector or welding between a terminal and a lead tab (not shown) or for irradiation of a laser beam.

In addition, the current collector 50 may have at least one injection hole. For example, the injection hole may be provided radially based on the current collector 50 hole. For example, a plurality of injection holes may be provided. In this case, the injection hole may improve the injection efficiency.

The battery cell 1 having the above configuration may be manufactured by the steps of: inserting an electrode assembly 10 through the opening of a battery housing 20; covering the opening of the battery housing 20 with a housing cover 30; and inserting a debossed ball 40 having a groove G on the circumference into a through-hole H provided in the housing cover 30.

According to this manufacturing method, gas generated during the pre-charge process may be smoothly discharged. That is, after the degassing process for discharging all gases generated during the pre-charge process through the through-hole H, the debossed ball 40 may be configured to be coupled to the through-hole H. Accordingly, the swelling phenomenon of the battery cell 1 may be prevented. In addition, according to the above manufacturing method, electrolyte may be smoothly injected through the through-hole H provided in the housing cover 30. Furthermore, according to the above configuration, the sealing between the housing cover 30 and the debossed ball 40 may be secured. In addition, the bonding strength between the housing cover 30 and the debossed ball 40 may be secured to a predetermined level or higher.

FIG. 11 is a drawing illustrating a battery pack including a battery cell 1 according to an embodiment of the present disclosure.

Referring to FIG. 11, a battery pack 3 according to an embodiment of the present disclosure includes a battery assembly in which a plurality of battery cells 1 according to an embodiment of the present disclosure are electrically connected, and a pack housing 2 that stores the battery assembly. Components such as a bus-bar for electrical connection, a cooling unit, and a power terminal are omitted from the drawing of the present disclosure for the convenience of illustration. In addition, the battery pack 3 may further include various components of the battery pack 3 known at the time of filing the present disclosure, such as a BMS, a pack case, a relay, and a current sensor.

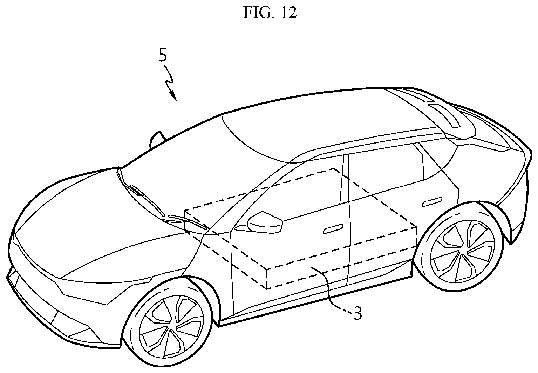

FIG. 12 is a drawing illustrating a vehicle including the battery pack 3 in FIG. 11.

Referring to FIG. 12, a vehicle 5 according to an embodiment of the present disclosure may be, for example, an electric vehicle, a hybrid vehicle, or a plug-in hybrid vehicle, and may include a battery pack 3 according to an embodiment of the present disclosure. The vehicle 5 includes a four-wheeled vehicle and a two-wheeled vehicle. The vehicle 5 operates by power supplied from the battery pack 3 according to an embodiment of the present disclosure. In addition, the vehicle 5 according to the present disclosure may further include various other components included in the vehicle, in addition to the battery cell 1 or the battery pack 3. For example, the vehicle 5 according to the present disclosure may further include a vehicle body, a motor, a control device such as an ECU (electronic control unit), and the like, in addition to the battery cell 1 according to the present disclosure.

Although terms indicating directions such as up and down are used in this specification, it is obvious to those skilled in the art to which the present disclosure pertains that these terms are only for convenience of explanation with reference the relevant drawings and may vary depending on the position of the target object or the position of the observer.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains.

### [Description of Reference numerals]

5: vehicle
3: battery pack
2: pack housing
1: battery cell
10: electrode assembly
11: first uncoated portion
12: second uncoated portion
H1: central winding hole
20: battery housing
30: housing cover
H: through-hole
40: debossed ball
G: groove
41: first area
42: second area
F: flat portion
D: insertion depth
50: current collector
L: laser beam

## Claims

1. A battery cell comprising:
an electrode assembly obtained by winding a first electrode and a second electrode around a winding axis with a separator interposed therebetween to define a core and an outer surface, wherein the first electrode comprises an active material portion coated with an active material layer along a winding direction and a first uncoated portion not coated with an active material layer, at least a portion of the first uncoated portion being used as an electrode tab by itself;
a battery housing configured to receive the electrode assembly through an opening formed on one side;
a housing cover configured to cover the opening and having a through-hole in a center; and
a debossed ball configured to be inserted into the through-hole.

2. The battery cell according to claim 1,
wherein the battery housing has a cylindrical shape with a constant radius.

3. The battery cell according to claim 1,
wherein the housing cover has a plate shape and is configured to be coupled to the opening of the battery housing.

4. The battery cell according to claim 1,
wherein a diameter of the through-hole is smaller than a diameter of a central winding hole of the electrode assembly.

5. The battery cell according to claim 1,
wherein a diameter of the debossed ball is smaller than a diameter of a central winding hole of the electrode assembly.

6. The battery cell according to claim 1,
wherein the debossed ball has a groove formed on a circumference.

7. The battery cell according to claim 6,
wherein an edge area of the through-hole of the housing cover is fitted into the groove.

8. The battery cell according to claim 6,
wherein the groove is provided in an area located outward in an axial direction of the battery cell from a center of the debossed ball.

9. The battery cell according to claim 6,
wherein, based on the groove, a volume of the debossed ball located outside the battery cell is smaller than a volume of the debossed ball located inside the battery cell.

10. The battery cell according to claim 1,
wherein a coupling angle between the housing cover and the debossed ball is greater than 90 degrees.

11. The battery cell according to claim 1,
wherein a welding bead is formed by welding at a contact point between the housing cover and the debossed ball.

12. The battery cell according to claim 11,
wherein the welding bead is formed up to an inner surface of the housing cover.

13. A method for manufacturing a battery cell, the method comprising:
inserting an electrode assembly through an opening of a battery housing;
covering the opening of the battery housing with a housing cover; and
inserting a debossed ball having a groove formed on a circumference into a through-hole formed in the housing cover.

14. A battery pack comprising at least one battery cell according to any one of claims 1 to 12.

15. A vehicle comprising at least one battery pack according to claim 14.
